# EUROPEAN PATENT SPECIFICATION

(11) **EP 1 625 696 B1**
(45) Date of publication and mention of the grant of the patent: **08.08.2012**
(21) Application number: 03816977.7
(22) Date of filing: 13.05.2003
(51) Int. Cl.: H04L 12/28, H04L 12/46, H04L 12/56

(54) **AN ARRANGEMENT AND A METHOD RELATING TO ETHERNET ACCESS SYSTEMS**
ANORDNUNG UND VERFAHREN FÜR ETHERNET-ZUGANGSSYSTEME
SYSTEME ET PROCEDE CONCERNANT DES SYSTEMES D'ACCES A L'ETHERNET

(43) Date of publication of application: 15.02.2006
(73) Proprietor: Telefonaktiebolaget LM Ericsson (publ), 164 83 Stockholm (SE)
(72) Inventor: ENGSTRAND, Rolf, S-127 36 Skärholmen (SE); JÄRREDAL, Ulf, S-172 38 Sundbyberg (SE)
(74) Representative: Bergentall, Annika Maria
(86) International application number: PCT/SE2003/000773
(87) International publication number: WO 2004/102890

(56) References cited:
- WO-A2-03/005648
- US-A1- 2002 101 870
- US-A1- 2002 131 414
- US-A1- 2002 174 251

## Description

### TECHNICAL FIELD

The present invention relates to a node adapted to act as an ingress point to an access network supporting communication of packet data in frames according to Ethernet technology between end users and end users or between end users and service providers. The invention also relates to a method for providing communication between end users and/or end users and service/providers over an access network, supporting communication of packet data in frames, implementing Ethernet or a similar technology.

### STATE OF THE ART

Access network operators provide for transportation of information (bits) between the customers of the access network. Networks supporting communication of packet data involve suitable technologies for the implementation of such services. One technology that appears to be useful for building access networks is based on the Ethernet technology, among other reasons because of the ubiquity and low costs involved for Ethernet equipment. Ethernet was originally developed as a LAN (Local Area Network) technology for providing an efficient infrastructure for data networks for example within a company. It was first developed for moderate speed shared media, but current technologies apply mainly to point to point links up to 10 Gbps, interconnected by high capacity Ethernet switches supporting virtual LAN, VLAN, cf. IEEE 802.1q. A virtual LAN is a group of systems, e.g. computers in a workgroup, that should be able to communicate with each other, and protocols for restricting the delivery of frames to members of the VLAN only. A LAN can be divided into multiple VLANs, each VLAN being assigned a number called a VLAN identifier or a VLAN tag for uniquely identifying it within the LAN. A LAN contains at least one VLAN, the default VLAN. Switches contain advanced self learning features and broadcast behavior, which are appropriate for the building of for example corporate networks, supporting a number of user groups.

In a structure for public service access, however, the requirements as to security, scaling, charging of services etc. are different from those in a LAN. In a public network each user preferably has his own completely isolated set of work groups available. One problem that arises is that the number of available VLAN tags, wherein each tag defines a user, is limited to the figure 4096, which is a small number when considering that there may be several thousands or even hundreds of thousands users that should be served.

Thus, although Ethernet is an attractive technology for the building of access networks, several features associated with the Ethernet technology are not at all suitable for the functioning as an access network. Equipment connected to an Ethernet network is able to monitor packets intended for other recipients, especially broadcast packets. It can also alter the topology of the network, as configured by the transparent spanning tree algorithm. Still further it can get control over what IP addresses other equipment uses, DHCP, PPPoE. In a network where hosts get their configurations from a DHCP, Dynamic Host Configuration Protocol, RFC 2131, a malicious user could set up an unauthorized DHCP server and thereby be able to configure other's hosts in a way which damages communication or makes all the information flow for another user available for observation and modification, the malicious user could accomplish this by specifying her own equipment as default gateway. Similar problems are at hand for the Point to Point Protocol over Ethernet, PPPoE, RFC 2516. It is also possible to act as another users equipment by transmitting false responses to Address Resolution Protocol, ARP, requests, RFC 826. In addition thereto it can establish itself as the recipient of information really intended for other equipment (ARP). But, since the users connected to an access network cannot be relied on to consistently act benignly, these features are not desirable and need to be removed. The VLAN concept solves these problems by separating the equipment into groups which cannot affect members of other groups. However, this entails a limitation to 4096 groups or even less than that for most equipment on the market. In an Ethernet network any equipment can communicate with any other equipment; VLANs are here considered separate networks. The access network operator, on the other hand, wants to be able to control which paths of communication that are available in order to be able to differentiate charging. The operator wants to be able to keep paths blocked until someone actually pays for them to be opened. Thus, although the Ethernet technology for several reasons is very attractive for being implemented as an access network, the Ethernet technology contains features which are not at all suitable, particularly for security reasons and for the restriction to the limited number of users as well as the difficulties in enabling for an operator to implement an appropriate charging model.

US 2002/0131414 discusses Ethernet networks used for communication on a metropolitan area scale. To solve problems associated with large tables in Ethernet switches contents of each original Ethernet packet, originating in a first Ethernet of an entity, e.g. a service provider, are encapsulated within another Ethernet packet giving the other packet a source address identifying the new encapsulating packet as originating at a port of a switch that is located at the interface between the first Ethernet (where the original packet originated) and a second Ethernet network, e.g. the metropolitan area Ethernet network, which is to transport the encapsulating packet, if it is known, otherwise an indicator. This system shows a comparatively complicated solution with several options, condition checks and it is not a straightforward system for an Ethernet network acting as an access network.

### SUMMARY OF THE INVENTION

Therefore a solution is needed through which an access network implementing Ethernet technology or similar can be used for providing communication between end users and/or end users and service providers also when there are a large number of users, a number which even may be substantially unlimited. An arrangement is also needed through which the security aspect of public networks can be considered. An arrangement as referred to above is also needed through which a low cost access network can be used based on an established and straight forward technology. Still further an arrangement is needed through which the requirements on an access network concerning the possibility to provide the operator with information about which packets belong to which subscriber etc. for charging and billing purposes. Particularly an arrangement is needed through which the traffic between a service provider and a subscriber can be handled easily, in a secure manner and with the appropriate information relating to available paths as required for charging. Still further an arrangement is needed through which charging can be differentiated and communication paths can be blocked until actually paid for or until the provisioning of an indication that they will be paid for. Still further an arrangement is needed through which an access network operator is given the ability to control the availability of communication paths. An arrangement is also needed which in an easy and low cost manner allows for traffic control among the establishment of service bindings, unicast as well as multicast bindings, and through which service connections securely can be established.

Particularly a node or a point in a network acting as an ingress or egress point allowing for the fulfillment of one or more of the above mentioned objects is needed. Still further a method for providing communication between end users and/or end users and service providers over an access network supporting communication of packet data in frames according to Ethernet technology or similar is needed through which one or more of the above mentioned objects can be fulfilled.

In order to solve one or more of the problems referred to above, the invention provides for a node, as initially referred to which has the characterizing features of claim 1. It particularly comprises means for de-encapsulating the new transport frame at the access network egress point, or at a point acting as an egress point for that connection and the converting means are adapted to de-encapsulate an encapsulated jumbo frame when acting as an egress point. Particularly the node acting as an ingress and an egress point comprises a so called peripheral point or acts as such. The ingress/egress point can be said to form an interface to the internal access network. Said encapsulating/de-encapsulating means comprise converting means, particularly so called peripheral converters. In one implementation the ingress point comprises an encapsulation branch point which all packet data traffic requiring encapsulation is obliged to pass (e.g. by a VLAN). Advantageously a packet received at an ingress point, or a point acting as an ingress point to the internal access network, and which packet has to be encapsulated, is encapsulated and transported through a tunnel. Particularly the packet is encapsulated in a GRE packet and transported through a GRE tunnel, GRE (Generic Routing Encapsulation). Generic Routing Encapsulation is for example described in Generic Routing Encapsulation (GRE), Network Working Group, Request for Comments: 1701, Category: Informational, by S. Hanks, NetSmiths, Ltd. T. Li et al., Cisco Systems, October 1994. In an alternative implementation MPLS (Multi Purpose Label Switching) is used for encapsulation and tunneling. Of course a number of other encapsulation and tunneling techniques are implementable.

In order to establish an identity for a connection, agreements are provided about destination address in a new transport frame, e.g. a GRE encapsulation frame, or according to some other type of encapsulation technique, depending on which tunneling technique that is used, and connection in the access network. The identity or information about the connection identity is included in the new transport frame. Other examples on tunneling encapsulation techniques are ATM (AAL5) with address VPI+VCI and MPLS with a label as address, discussed in RFC 2684 and RFC 3031 respectively.

In a particular implementation means external of the access network are responsible for sorting arriving packets into connections and defining the result of the sorting as a connection identity to be used in a new transport frame. Particularly, through giving the destination address, information is provided about which tunnel should be used. In a particular implementation a tunnel (any tunnel) is used for external transportation of the packets, whereas for transportation through the access network, a tunnel for the purposes of the present invention is used, and these two tunnels are mapped at the points acting as ingress/egress points.

Particularly the access network comprises so called VLANs, Virtual Local Area Networks as referred above, and VLAN technology is implemented. In a particular implementation the connection identification comprises a VLAN tag. According to different embodiments, the connection identification in the form of a VLAN tag is used for connections or interfaces to end users only, whereas in another implementation connection identification in the form of a VLAN tag is used both for connections or interfaces to end users and to service providers. If the VLAN tag is used as a connection identification only for interfaces/connections to end users, other identification provisionings are implemented for interfaces/connections to service providers. This is particularly relevant since the number of VLAN tags is limited, however depending on implementation, this might be of importance or not.

As referred to above, for identification (and encapsulation) purposes, also e.g. MPLS may be implemented.

For each unicast connection, a MAC (Medium Access Control) address is designated for the origination address and for the destination address respectively. The designation of the MAC addresses can be performed in different ways, but according to one implementation the management system managing the connection designates the MAC addresses. Although Ethernet technology is implemented, it should be clear from the reading of this document, that some of the properties of an Ethernet are implemented but not all, according to different implementations specific properties may be implemented or not. Thus, in one implementation the same address of a service provider (ISP) is used for a plurality of connections to that particular service provider. Similarly broadcasting may be implemented to indicate the location of MAC addresses, if such are implemented. The broadcast frames from an end user may be encapsulated in a new transport frame.

In one implementation multicast connections may be set up without encapsulation, each service provider being assigned or restricted to a specific multicast address range.

The node according to the invention acts as, comprises, in addition to an ingress point also an egress point of an access network supporting Ethernet functionality for frame transportation (or a similar functionality). It comprises means for, at least for a connection between an end user and a service provider, over the access network, encapsulating packets arriving at the point/node, substantially unmodified in another, new transport frame, and for providing said new transport frame with a unique connection identification being a combination of the origination (end user) address and the destination address for the frame, whereby said new transport frame may comprise a jumbo frame. The connection identification at least has to be a combination of information relating to origination and destination address for the frame, and a VLAN tag indicating service belonging of the packet.

The point/node further comprises means for de-encapsulating an encapsulated frame, particularly a jumbo frame, when acting as an egress point. The nodes or points particularly comprise so called peripheral points and the encapsulating/de-encapsulating means particularly comprise converting means. In one implementation it comprises a branch point which all packet data traffic requiring encapsulation is obliged to pass. The encapsulating means are particularly used to encapsulate packets in order to tunnel them through the access network. Different kinds of tunneling techniques may be implemented. In one particular implementation it comprises a GRE tunnel. Other alternatives are also possible.

The point/node particularly comprises or is associated with means for sorting arriving packets into connections and for defining the result of the sorting as a destination address to be used for the new transport frame or in the new transport frame.

In a particular implementation the identification comprises a VLAN tag. According to different embodiments, VLAN tags can be used for connection identification purposes for connections or interfaces to end users only, in which case connection identifications or interfaces/connections to service providers, are provided for in a different manner. In another implementation VLAN tags as connection identifications are used both for connections or interfaces to end users and to service providers. Particularly a MAC address is designated for packet origination and destination address respectively, for each unicast connection. MAC addresses may be designated in different manners, but in an advantageous implementation MAC addresses are designated by the management system managing the connection.

In order to remove one or more of the problems or to fulfill the objects initially referred to, the invention also suggests a method for providing communication between end users and end users/service providers over an access network supporting communication of packet data in frames implementing Ethernet or a similar technology. The method comprises the steps of; determining or generating a unique connection identification comprising a combination of origination address and destination address information of a packet connection for a frame arriving at a point acting as or being an ingress point to the access network, at least for a connection between an end user and a service provider; encapsulating the frame and said connection identification in a new transport frame; transporting the transport frame through the access network to the relevant point comprising or acting as an egress point from the access network using the destination address information; de-encapsulating the created transport frame at the point being or acting as an egress point; sending the original frame on. The ingress point may comprise a physical ingress point and the method supports the transportation of jumbo frames, the access network thus supporting transportation of such frames. The method comprises the step of encapsulating an incoming frame in a tunnel, for tunneling purposes. In principle any tunneling technique may be used, for example GRE, MPLS etc.

The method may further comprise the steps of; sorting arriving packets into connections; defining the result of the sorting as destination addresses for different connections; using the relevant destination address in each created transport frame.

In one implementation the method comprises the step of, in an access network comprising VLANS, using a VLAN tag as connection identification, at least for connections or interfaces to end users. VLAN tags may also be used as connection identifications for connections or interfaces to service providers. Alternatively, for service providers, connection identifications may be provided for in other manners.

In a particular implementation the method comprises the step of designating a MAC address for the origination address and designating a MAC address for the destination address, for each unicast connection. In one implementation MAC addresses are designated by a management system managing the respective connection.

### BRIEF DESCRIPTION OF THE DRAWINGS

The invention will in the following be further explained in a non-limiting manner, and with reference to the accompanying drawings, in which:
- Figs. 1A, 1B: show an overview of an external network and an access network in which the inventive concept is implemented,
- Fig. 2: schematically illustrates an access network comprising an Ethernet network with peripheral points comprising peripheral converters managed by a management system,
- Fig. 3: illustrates the format of a packet arriving at an ingress point to the access network,
- Fig. 4: illustrates the format of a packet as converted by the converting means in the ingress point for transportation across the access network,
- Fig. 5: illustrates the conversion between a user side Ethernet frame and the user frame as encapsulated in a jumbo frame,
- Fig. 6: is a flow diagram describing the process of generating an encapsulation frame (conversion of frame from user to access network frame),
- Fig. 7: is a flow diagram schematically illustrating the procedure for a packet incoming to a point acting as an access network egress point, i.e. of frame de-encapsulation,
- Fig. 8: is a flow diagram describing the process of converting an encapsulated frame of the access network to a packet intended for a service provider implementing GRE,
- Fig. 9: illustrates conversion between access network jumbo encapsulation and external network GRE-encapsulation,
- Fig. 10: is a flow diagram illustrating the process of converting a frame of an external network (from a service provider) to a network transport frame, and
- Fig. 11: illustrates an alternative implementation of conversion between jumbo transport frames and external network GRE frames in which the external GRE header is included in the jumbo frame.

### DETAILED DESCRIPTION OF THE INVENTION

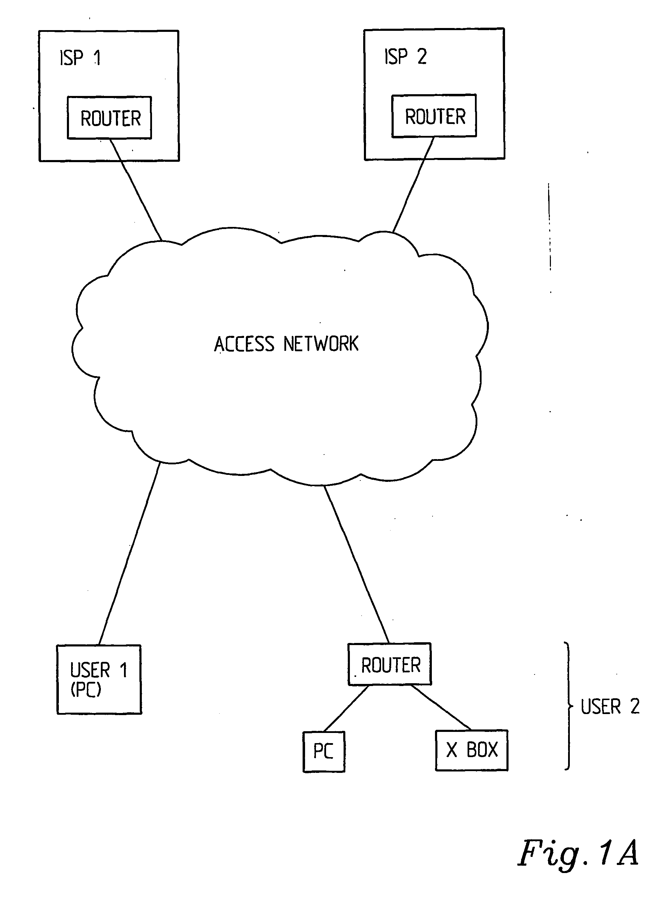

Fig. 1A very schematically illustrates an access network providing connection between user 1, here comprising a PC, user 2 comprising a router connecting to a PC and XBOX and ISP 1,2 (Internet Service Provider) with corresponding routers.

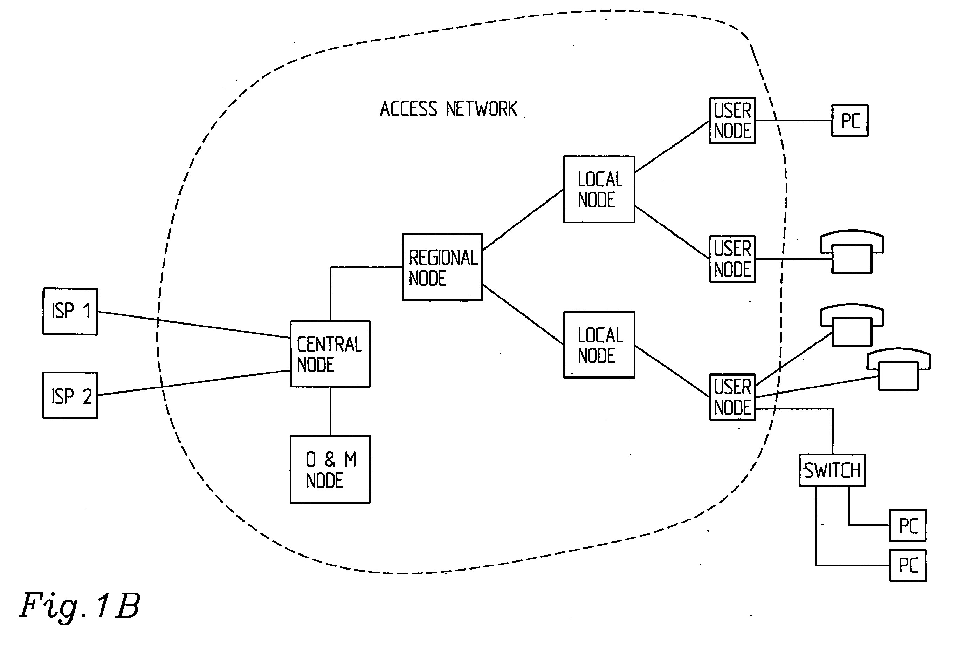

Fig. 1B shows one example of an access network to which the inventive concept can be implemented. The access network is illustrated within a dashed line and it here comprises a central node which comprises a routing interface to service providers ISP 1, ISP 2, including security functions, a regional node for (here) Ethernet switching within the access network, which is supposed to be an Ethernet, and local nodes comprising interfaces to end users. A conventional O&M node (Operation and Maintenance) is also illustrated.

The Ethernet access network provides communication services primarily to homes and small businesses. Here the expression access network service is used in a specialized sense, namely for the transfer of information through the access network.

The access network service is only a small part of the implementation of the service that the end user recognizes. Examples of services seen by users are TV channel distribution, telephony and video on demand. Internet access is another example of a service which is recognized by the user. However, since Internet access has many different uses which can be seen themselves as their own applications, it is not appropriate for clarification of the concept of a service.

For each end user there is a physical point where the end user connects her equipment to the network. From this point the information is transported towards the interior of the network, typically by optical fiber, electrical wire or radio waves. At some point the information reaches equipment which interacts with many end users' equipment to aggregate and distribute information flows. The point where a particular user is connected to this equipment is called a port. The port is a point where the access network has natural means for distinguishing information from and to different users.

The user connects several different boxes (communication equipment) to the network, notably telephone, PC and TV set-top-box. The information from these boxes is at least in some cases to be handled differently, depending on which box is communicating. The frames may for example be destined to different ports and have different requirements as to delay, reliability and bandwidth.

In most Ethernet/IP networks the sender decides destination by specifying an appropriate destination address. It is also common that the sending equipment marks Quality of Service (QoS) requirements in the packet sent. In the access network, the network itself must keep close control over how packets are handled. The user buys access to certain services. The user marks each packet sent with something by which the network can determine which service the packet belongs to. The network may modify the packet so that it is marked according to some network internal scheme for differentiating between services. All equipment within the network is configured to handle each packet according to the rules defined for the service to which the packet belongs according to the marking. Often the destination address is part of the definition of the service. This means that two service providers offering identical services are represented as two services in the network. It should be noted that for the network to know how to handle a packet, it must know which user sent it (determined by noting at which port it arrives) and to which service it belongs (determined by reading a signal added to each packet by the sender). For lack of a better term, the term flow is used for all packets which have their origin at one and the same user and which belong to the same service.

In an access network, Fiber Ethernet Access Network produced by Ericsson under the name AXC 105, the end users are required to mark service affinity by sending packets in specific VLANs, i.e. their equipment writes different VLAN identifier values in packets using different services. This can be achieved for example by the user installing a switch with port based VLANs, connecting PC, IP telephony converter and TV set-top-box to different ports in the switch and configuring each of the ports to belong to the appropriate VLAN according to instructions from the access network operator. As a special case the system allows one of the flows at each port to use packets without VLAN fields.

For a complete communication service, recognizable by the end user, to be implemented, a lot more than the access network service is needed. For a PC to be connected to Internet, the access network must be connected to all the other networks of Internet. For telephone calls, the network must be connected to the International telephony network, which involves conversion between communication standards, performed by a telephony gateway. The organisations which provide connectivity to the external networks, and format adaptation to other networks, are called service providers. Service providers can also generate the actual information content communicated, for example by installing a video server with stored movie films on a hard disk or by installing a World Wide Web server which provides web pages. In the context of the present invention, the important difference between end users and service providers is that service providers may have a need to distinguish between a large number of other entities with which they communicate. This means that there may be a need for the access network to provide means by which the other end of the communication is identified. A complete definition of a service includes identification of the service provider.

According to the inventive concept, all packets are encapsulated in new packets, which are used only within the access network. This means that each flow gets its own tunnel. The addressing in the encapsulation, (new transport packet) packet has the dual role of identifying the ports and the end points of the tunnel and identifying the service the tunnel is used for. In AXC 105, the packet is an Ethernet frame with destination and source address. For the Ethernet network to work, the addresses must uniquely indicate the port where the packet entered the network (the source) and the port where it is to leave the network (the destination). It is acceptable to let several different addresses represent the same port, but each address can represent only one port. In the tunneling scheme of the present invention the VLAN tag may be used to signal which service the packet belongs to.

In each end of the tunnel and for each direction of the flow, there must be an agreement about how to convert between the information in the encapsulation used internally in the access network and the format used in the external network.

According to the present invention packets are encapsulated without modification. Therethrough the external network has access to the Ethernet functionality, although confined to the connection as desired.

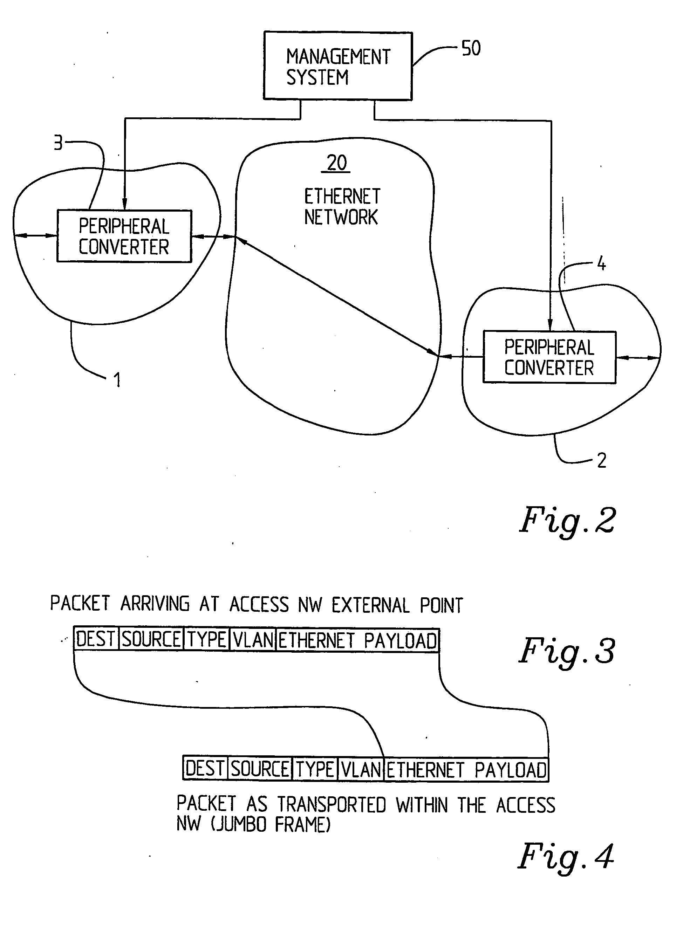

Fig. 2 illustrates an access network 20, here comprising an Ethernet network with peripheral points 1,2 comprising peripheral converters 3,4 respectively, which are managed by management system 50. The management system 50 accepts requests for connections to be set up between the peripheral points 1,2. For each point the connection is identified by some feature which is common for all packets on ingress at the ingress point and which feature is not present for packets for other connections on ingress at this particular ingress point. In one implementation a so called VLAN tag is used as a connection identification. In one implementation a VLAN tag is used as connection identification on interfaces to end users. For interfaces to service providers the address space provided by VLAN tags may be insufficient. Then some other means for connection identification is needed to establish what connection any packet belongs to. According to one embodiment packets are required to be encapsulated in a tunnel when arriving at an interface. In one particular implementation GRE encapsulation is implemented. This is for example described in Generic Routing and Encapsulation (GRE), request for comments: 1701 as referred to earlier in the application. The connection identity can then be established by an agreement about mapping between destination address in the GRE encapsulation packet, i.e. the new transport packet, and connection in the access network, i.e. the equipment outside the access network is required to sort packets into connections and express the result of the sorting as the destination address in an encapsulation packet.

For unicast connections the management system designates a MAC address for each endpoint of the connection. Preferably large forwarding tables containing such information are provided at central points, however also other implementations are possible, the main thing being that the information is available. The peripheral points, here 1,2, between which the connection is to be established, are configured to receive by and transmit to these addresses. When a peripheral point receives the packet for the connection from the external side or from the external network, the respective peripheral converter, here e.g. 3 (or 4), puts an incoming frame in another new, transport frame, which is given the MAC address of this end of the connection as source address and the address of the other end of the connection as the destination address, i.e. here the address of peripheral point 2. It is a requirement that the combination of addresses or address information is unique for the specific connection, but one of the addresses may be shared and used for other connections as well. Typically the address of a service provider can be the same for several connections to this service provider. This means that the arriving frame is encapsulated in a new transport frame.

Fig. 3 schematically illustrates an incoming packet arriving at an external or peripheral point 1 of the access network 20. In a conventional manner it comprises data fields for destination address, source address, type, VLAN and an Ethernet payload. In the peripheral point the arriving packet is converted and encapsulated by the peripheral converter. The new transport packet is schematically illustrated in Fig. 4 and in this new packet the entire arriving packet is contained in an Ethernet payload data field whereas connection identification comprising destination and source address information as explained above is provided in the fields DEST and SOURCE in the figure. A type indication and a VLAN indication are also provided. As the new transport frame necessarily is somewhat larger than the arriving frame, there might be a potential problem when the arriving frame is of maximum size. According to the invention this is solved by constraining arriving frames to normal frame size and encapsulating them in jumbo frames. Therefore the equipment in the access network is required to support transportation of jumbo frames. A jumbo frame is in principle any frame that is larger than the requirements on maximum size in the IEEE standard. The definition of frame size is vendor dependent, as these are not part of the IEEE standard. Jumbo frames are frames bigger than the standard Ethernet frame size, which is 1518 bytes (including Layer 2 (L2) header and Frame Check Sequence (FCS)).

When the new transport frame, i.e. the encapsulated frame, arrives at the other peripheral point, e.g. 2, the encapsulated frame is taken out or de-encapsulated and sent onwards. The destination address information in the encapsulated frame or in the transport frame can optionally be used to determine which port it is to be sent on to. In one implementation the encapsulation is carried out in the absolute periphery or in actual peripheral points. In other embodiments the encapsulation is not performed in the absolute periphery. For example may VLANs be organized to form a branch, all traffic of which is ensured to pass an encapsulation point. '

Particularly, within the access network, broadcast only is used for implementing the connections, to show the network where the MAC addresses are. When an encapsulation point sees a broadcast to an address which it implements itself, it sends an empty frame, i.e. an encapsulation of nothing, in the other direction as a response. Broadcast frames from the end user are encapsulated and transported to the recipient or the receiver in the same way as other traffic.

In one implementation multicast connections are carried on the same network but without being encapsulated in transport frames. It is then, however, necessary to restrict the different service providers to different multicast address ranges.

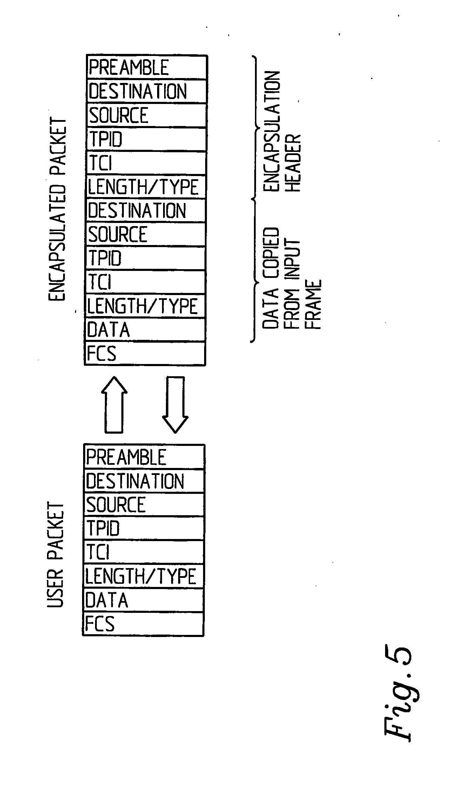

Fig. 5 illustrates more in detail the conversion between a user packet, i.e. a packet on the user side, and an encapsulated packet, i.e. the packet of the user as encapsulated in a new transport frame according to the present invention. The figure shows the conversion between a plain Ethernet frame and an encapsulated jumbo frame, i.e. the format change between a normal Ethernet frame on the user side and an encapsulation in a jumbo frame on the access network side. In the normal interface to an end user, in this implementation illustrating tunnel conversion in an embodiment in which VLAN tags are used as identifiers, the VLAN tag signals which service the packet belongs to. In the direction from the user, the network uses the port number and the VLAN tag to look up tunnel data in a table. In the other direction, i.e. towards the user, the VLAN tag in the encapsulated packet is sufficient to determine the VLAN tag that should be put in the packet that is sent to the user. The field names in the figure represent fields in the user frame. Most of them have the same values in the user frame as in the access network frame, i.e. the new transport frame or the encapsulated jumbo frame. TPID relates to a tag protocol identifier, TCI means Tag Control Information, and FCS means Frame Check Sequence. Except for the preamble, most of the data of the input frame of the user packet is simply copied to the transport frame which is enlarged to comprise a jumbo frame and including an encapsulation header with preamble, destination, source, TPID, TCI and length/type data fields. The data copied from the input frame (in the direction from user side to access network) comprises the Ethernet payload of the encapsulated jumbo frame, or the new transport frame.

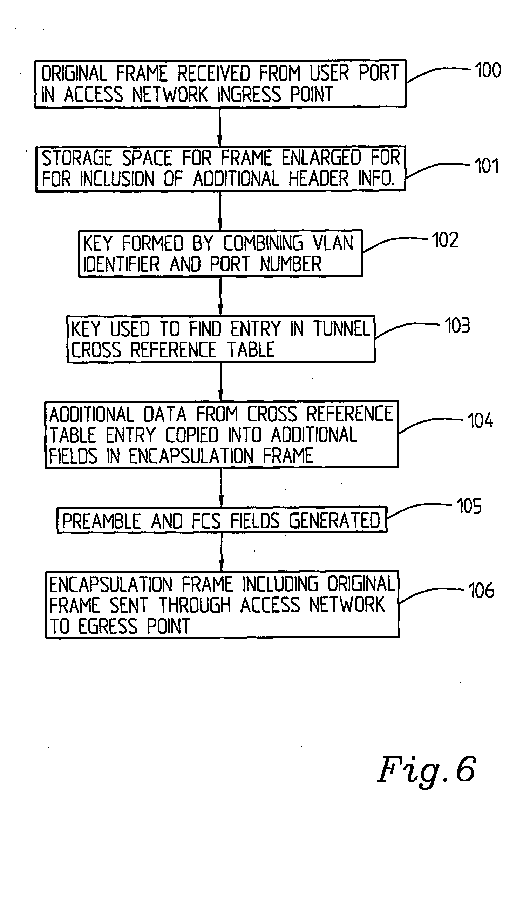

Fig. 6 is a flow diagram schematically describing the process when a user packet, or a user frame, is received at the access network ingress point where it is converted to an encapsulated (jumbo) frame. Thus, the original frame from the user port is received in the access network ingress point, 100. Then the storage space for the frame is enlarged in order to be able to also take up additional header information, i.e. the encapsulation header as described above, 101. Subsequently a key is formed by combining the relevant VLAN identifier (for example 12 bits out of TCI) and a port number, 102. Then the key as found in the preceding step is used to find the appropriate entry in a tunnel cross reference table, 103. Additional data from the cross reference table entry is then copied into the additional fields in the encapsulation jumbo frame, 104. Preamble and FCS fields are generated, 105. When this has been done, the new transport frame, or the encapsulated frame, can be sent, including almost all of the original frame, 106.

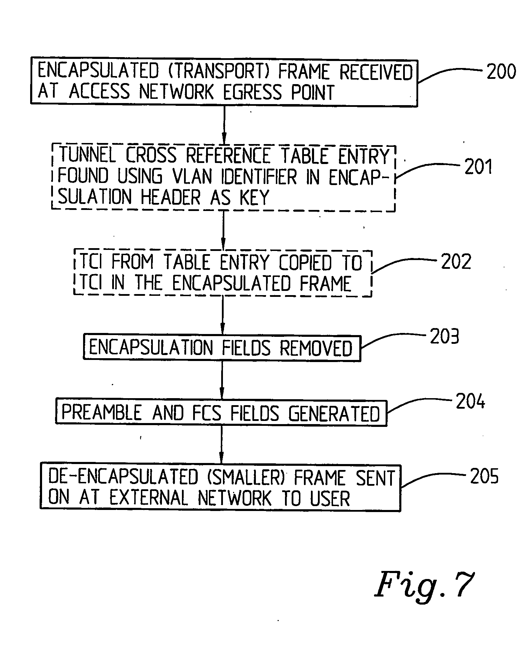

Fig. 7 illustrates the procedure at the egress point from the access network to an external network, particularly when a frame is intended for a user. More precisely this relates to a process of de-encapsulating or unpacking a frame, a so called encapsulated frame or a transport frame. Thus, it is supposed that an encapsulated transport frame is received at the access network egress point, 200. Then a tunnel cross reference table entry is to be found. In this implementation a VLAN identifier, or a VLAN tag, in the encapsulation header is used as a key to find said entry, 201. Subsequently TCI from the table entry is copied to TCI in the encapsulated frame, 202. Thereupon the encapsulation fields are removed, 203, i.e. the encapsulation header as illustrated in Fig. 5. It should be clear that steps 201, 202 could be excluded, and they are therefore indicated within dashed lines in Fig. 7. Thereupon a preamble and FCS fields are generated for the frame to be transported over the external network, 204. Subsequently the smaller frame is sent on over the external network, 205. Since the frame is intended for a user, it is smaller than the encapsulated jumbo frame (also denoted the transport frame).

In the following embodiments will be described which relate to conversion between a tunnel used for the transportation across the access network, i.e. the encapsulating jumbo frame as described above, and external tunnels in external networks. In the interface to a service provider there might be a need to differentiate between flows connected to different end users at the other end of the tunnel. This may for example be accomplished by connecting the internal tunnel to some other tunneling system in the external network, for example Generic Routing Encapsulation (GRE) tunnels.

In the direction towards a service provider, the source address of the encapsulated packet is translated (or possibly just copied) into a source address in the external, in this case, GRE, tunnel. The source address is the important part. According to some implementations the destination address also needs to be changed. In the direction towards the access network, on the other hand, the destination address is translated (possibly only copied) into a destination address which can function in the access network. The choice between the translation and copying depends on how address selection has been negotiated. If the access network is allowed to select addresses, the addresses can be the same both within the access network and in the external network, i.e. they are copied.

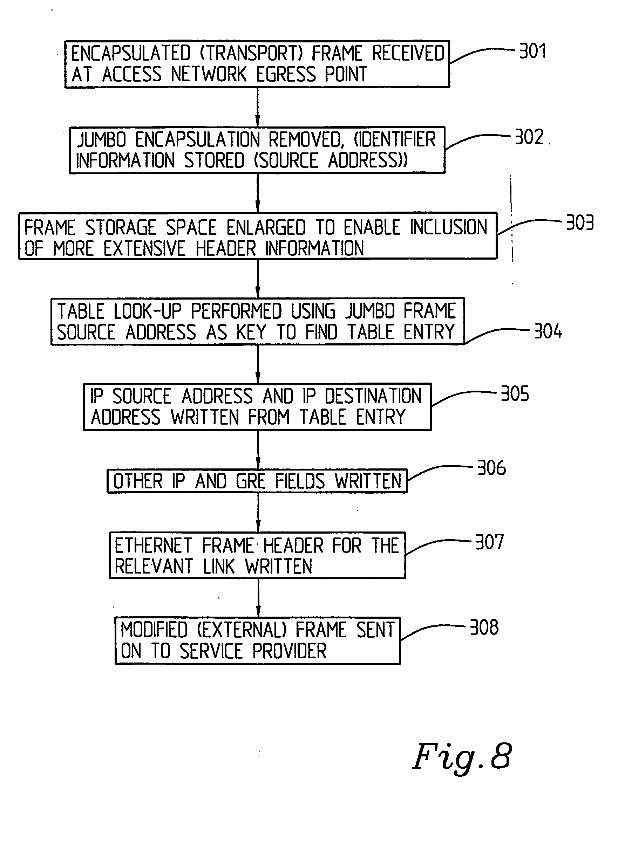

Fig. 8 illustrates an embodiment in which an encapsulated frame, or a transport frame, used for transfer across the access network, is converted to a packet to be sent to an external network of a service provider, or to the service provider. Thus, in the process of generating a packet to be sent to the service provider, in a first step the encapsulated (transport) frame is received at the access network egress point, 301. Subsequently the jumbo encapsulation is removed, 302. Generally identification information is stored or cached, i.e. the source address. Subsequently the frame storage space is enlarged to enabling inclusion of the more extensive header information of the external network, 303. If this challenges the maximum size limit for the Ethernet link to the service provider, then the payload data of the IP packet, i.e. the GRE packet, may also be split into two packets. This is a normal procedure of the IP (Internet Protocol) protocol, and therefore will not be further described herein. Preferably, however, jumbo frames are used also in the interface to the service provider so that packet splitting is not called for. Thus, it is supposed that an original frame was received at the access network ingress point, enlarged in order to form a transport frame or an encapsulated frame to be transferred across the access network, and again enlarged for transportation in an external GRE tunnel. (If a packet from an external GRE tunnel or some other tunnel arrives at an access network ingress point, GRE headers etc. are removed and the original user frame is enlarged and provided with a jumbo encapsulation header etc.)

Subsequently a table look up is performed using the encapsulated jumbo frame source address as key, 304, to find a table entry. Then the IP source address and IP destination address are written from the found table entry, 305. Thereupon other IP and GRE fields are written. In one implementation all of these are constants, the same in all packets. However, one or more fields might have to be variable, i.e. copied from the look up table, 306. Finally the Ethernet frame header for the link is written, 307, and the modified external frame is sent onto the service provider, 308, over a GRE tunnel (in this implementation).

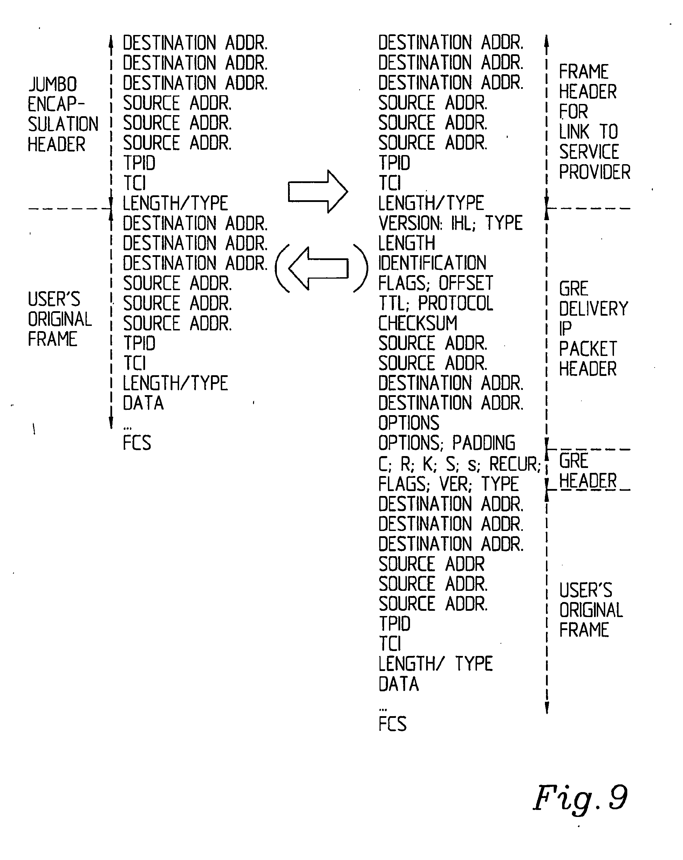

Fig. 9 illustrates conversion between encapsulated jumbo frames for access network transportation according to the present invention, and external GRE encapsulations over an external network. As can be seen the original user frame is encapsulated in a new transport frame or a jumbo frame which means that all, or substantially all, of the original user frame is sent in an Ethernet payload field and that destination address, source address, TPID, TCI and length/type for forming a jumbo encapsulation header are added, and hence converted, the frame arriving at a peripheral point forming access network ingress point is transported over the access network. At the access network egress point the jumbo encapsulation header is removed, the address information thereof is kept for use in the external network GRE encapsulated frame, the original frame is provided with a GRE header, GRE delivery IP packet header and frame header for the link to the service provider. Generally each row contains 16 bits although some of them may contain only 8 bits. Thus, the enlarged "original frame" is enlarged, encapsulated, at entry to the access network, and again unpacked and instead encapsulated in a GRE tunnel when leaving the access network.

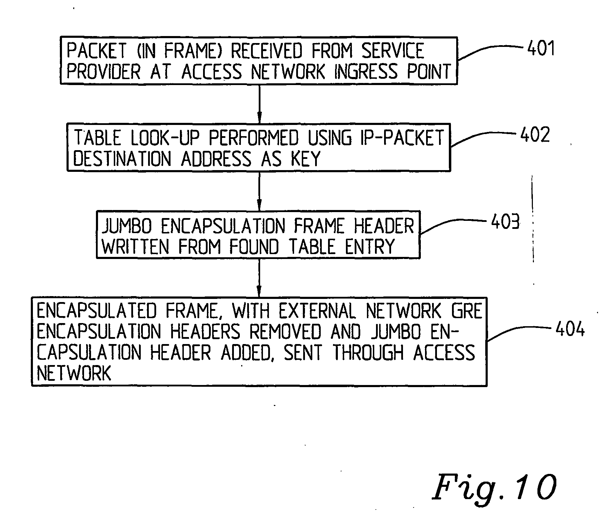

Fig. 10 shows an implementation in which a packet in a frame from a service provider at an access network ingress point is converted to an encapsulated transport frame for transport across the access network. Thus, a packet (in the frame) is received from the service provider at the access network ingress point, 401. A table look up is performed using IP packet destination address as a key, 402. Subsequently the jumbo encapsulation frame header as found from the table entry is written, 403, and the encapsulated access network transport frame is sent on, 404. Thus, the encapsulated frame from the external network comprises an external encapsulation header which is removed and another transport (jumbo) encapsulation header is added, and it is sent through the access network. In this case the frame sent over the access network is smaller than the frame arriving from the service provider network. The user frame gets larger due to the jumbo encapsulation header but as it was encapsulated in a still larger GRE encapsulation, the frame, i.e. the transport frame, is smaller than the arriving frame.

In order to establish a new service, a tunnel type to connect to could be established in each end point. The tunnel type may be as VLAN, which is not an actual tunnel. Otherwise, it may relate to any relevant tunnel type. In each end of the tunnel the addressing mode is determined. It is also determined if address information can just be copied, or if there is a requirement to use a cross reference table to change addresses.

In order to provide a service to a user, a table entry is inserted in the cross reference table at each end of the tunnel to be used for the service.

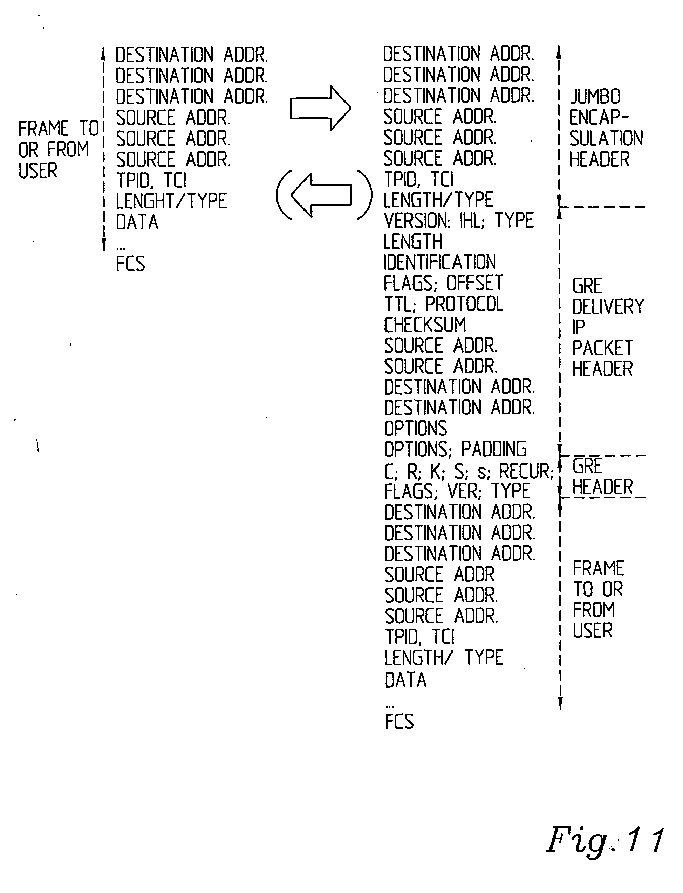

In Fig. 11 still another implementation is illustrated in which the GRE header information is introduced in the access network transport frame, i.e. the encapsulated jumbo frame. This is an embodiment which makes the procedure simpler, but, on the other hand it requires more bandwidth than the embodiment described above.

Fig. 11 illustrates an implementation in which a conversion is performed between a frame from/to a user, and the user frame as GRE encapsulated, and further encapsulated in a new transport frame (jumbo frame) according to the inventive concept. For a connection between an interface where VLAN is used to identify the connection and an interface where GRE (IP) is used to identify the connection, it may be advantageous to make the GRE encapsulation and de-encapsulation at the VLAN interface. One reason for this could be that the VLAN interface is more programmable or has more capacity for format conversion. This will require some additional bandwidth in the access network, though.

At the user interface the frame that arrives from the user is encapsulated in a GRE encapsulation which is encapsulated in a jumbo encapsulation and the frame that arrives from the network (the service provider) is stripped of its jumbo encapsulation and its GRE encapsulation as well.

The only operation necessary at the GRE (service provider-) interface is the splitting of the IP packet, which may be necessary because the jumbo frame may be too big to be transported over the link to the service provider.

It should be clear that the invention is not limited to the specifically illustrated embodiments. On the contrary, it can be varied in a number of ways within the scope of the appended claims.

## Claims

1. A node adapted to act as an ingress point to an access network (20) supporting communication of packet data in frames according to Ethernet technology between end users and end users or between end users and service providers,
**characterized in**
**that** it comprises converting means (3) which, at least for all unicast connections and at least for establishment of a packet connection between an end user and a service provider, are adapted to convert and encapsulate each arriving, incoming, user frame of normal, standard Ethernet frame size comprising a preamble, data fields for destination address, source address, type, VLAN and an Ethernet payload, into a new transport frame larger than the frame of standard Ethernet frame size, and for use only within the access network, which new transport frame comprises a jumbo frame with an Ethernet payload field and connection information fields, by, except for the preamble, copying the data fields and the Ethernet payload of the user frame to the jumbo frame Ethernet payload data field and providing a connection identification comprising a combination of source address information of the network ingress point of the arriving, incoming, packet, and destination address information of an external or peripheral point of the access network acting as an access network egress point where the packet is to leave the access network, and a VLAN tag for indicating service belonging of the packet, the source address information comprising a designated MAC address and the destination address information comprising a designated MAC address, said connection identification being unique for the connection.

2. A node according to claim 1,
**characterized in**
**that** it further is adapted to act as an access network egress point and that the converting means (3,4) are adapted to de-encapsulate an encapsulated jumbo frame when acting as an egress point.

3. A node according to claim 1 or 2,
**characterized in**
**that** it is a branch point which all packet data traffic is obliged to pass.

4. A node according to any one of claims 1-3,
**characterized in**
**that** the identification comprises a VLAN tag, said VLAN tag indicating which service a packet belongs to.

5. A node according to any one of claims 1-4,
**characterized in**
**that** for each connection being a unicast connection, a MAC address is designated for the packet origination and destination address respectively.

6. A node according to claim 5,
**characterized in**
**that** the MAC addresses are designated by a management system managing the connection.

7. A method for providing communication between end users and end users or between end users and service providers over an access network supporting communication of packet data in frames implementing Ethernet technology,
**characterized in**
**that** it comprises the steps of, in a point or node acting as an access network ingress point, at reception of each user packet transported in a frame of normal, standard, Ethernet format from an external network:
- converting and encapsulating the user packet comprising a preamble, data fields for destination address, source address, type, VLAN and an Ethernet payload into a new, transport frame which is larger than the standard, normal Ethernet frame and comprises a jumbo frame with an Ethernet payload field and connection information fields by:
- copying, except for the preamble, the data fields and the Ethernet payload of the user frame to the jumbo frame Ethernet payload data field;
- providing a connection identification comprising a combination of destination and source address information of the network ingress point and of an external or peripheral point of the access network to act as an access network egress point of the packet, the source address information comprising a designated MAC address and the destination address information comprising a designated MAC address, and identifying service belonging of the packet by means of a VLAN tag, which connection identification is unique for the connection; and
- transporting the transport frame as a jumbo frame through the access network to the relevant egress point using the destination address information of the unique connection identification and using the new transport frame only within the access network.

8. A method according to claim 7,
**characterized in**
**that** it comprises the steps of, at a node acting as an access network egress point, at reception of a packet transported over the access network as a new jumbo, transport frame, de-encapsulating the jumbo frame by;
- removing connection identification fields;
- generating a preamble and FCS fields to provide an external frame; and
- sending the de-encapsulated, external frame on.

## Patentansprüche

1. Knoten, ausgelegt zum Arbeiten als ein Eingangspunkt in ein Zugangsnetz (20) zur Unterstützung einer Kommunikation von Paketdaten in Frames gemäß Ethernet-Technology zwischen Endnutzern und Endnutzern oder zwischen Endnutzern und Dienstanbietern, **dadurch gekennzeichnet, dass** dieser Konvertiermittel (3) umfasst, die, zumindest für alle Unicast-Verbindungen und zumindest zum Einrichten einer Paketverbindung zwischen einem Endnutzer und einem Dienstanbieter zum Konvertieren und Verkapseln ausgelegt sind, von jedem ankommenden, eingehenden Nutzer-Frame einer normalen, Standard-Ethernet-Frame-Größe mit einer Präambel, Datenfeldern für Zieladresse, Ausgangsadresse, Typ, VLAN und einer Ethernet-Nutzlast, in einen neuen Transport-Frame, der größer als der Frame einer Standard-Ethernet-Frame-Größe ist, und der nur in dem Zugangsnetz verwendet wird, wobei der neue Transport-Frame einen Jumbo-Frame mit einem Ethernet-Nutzlastfeld und Verbindungsinformationsfeldern umfasst, indem, mit Ausnahme der Präambel, die Datenfelder und die Ethernet-Nutzlast des Nutzer-Frames in das Jumbo-Frame-Ethernet-Nutzlastdatenfeld kopiert wird, und durch Bereitstellung einer Verbindungsidentifikation mit einer Kombination einer Ausgangsadresseninformation des Netzeingangspunkts des ankommenden, eingehenden Pakets, und einer Zieladresseninformation eines externen oder peripheren Punkts des Zugangsnetzes, der als ein Zugangsnetz-Ausgangspunkt arbeitet, an dem das Paket das Zugangsnetz verlässt, und ein VLAN-Tag zum Anzeigen eines Dienstes, der zu dem Paket gehört, wobei die Ausgangsadresseninformation eine designierte MAC-Adresse umfasst und die Zieladresseninformation eine designierte MAC-Adresse umfasst, wobei die Verbindungsidentifikation für die Verbindung eindeutig ist.

2. Knoten nach Anspruch 1, **dadurch gekennzeichnet, dass** dieser ferner ausgelegt ist zum Arbeiten als ein Zugangsnetz-Ausgangspunkt, und dass die Konvertierungsmittel (3, 4) ausgelegt sind, zum Entkapseln eines verkapselten Jumbo-Frames, wenn dieser als ein Ausgangspunkt arbeitet.

3. Knoten nach Anspruch 1 oder 2, **dadurch gekennzeichnet, dass** dieser ein Verzweigungspunkt ist, den ein gesamter Paketdatenverkehr passieren muss.

4. Knoten nach irgendeinem der Ansprüche 1-3, **dadurch gekennzeichnet, dass** die Identifikation ein VLAN-Tag umfasst, wobei das VLAN-Tag anzeigt, welcher Dienst zu einem Paket gehört.

5. Knoten nach irgendeinem der Ansprüche 1-4, **dadurch gekennzeichnet, dass** für jede Verbindung, bei der es sich um eine Unicast-Verbindung handelt, eine MAC-Adresse für die Paketursprungs- bzw. Zieladresse vorgesehen ist.

6. Knoten nach Anspruch 5, **dadurch gekennzeichnet, dass** die MAC-Adressen durch ein Verwaltungssystem, das die Verbindung verwaltet, vorgesehen sind.

7. Verfahren zum Bereitstellen einer Kommunikation zwischen Endnutzern und Endnutzern oder zwischen Endnutzern und Dienstanbietern über ein Zugangsnetz, das eine Kommunikation von Paketdaten in Frames unterstützt, die Ethernet-Technologie implementieren, **dadurch gekennzeichnet, dass** dieses die Schritte umfasst zum, in einem Punkt oder Knoten, der als ein Zugangsnetz-Eingangspunkt arbeitet, bei Empfang von jedem Nutzerpaket, das in einem Frame eines normalen Standard-Ethernet-Formats von einem externen Netz transportiert wird:
- Konvertieren und Verkapseln des Nutzerpakets mit einer Präambel, Datenfeldern für Zieladresse, Ausgangsadresse, Typ, VLAN und einer Ethernet-Nutzlast in einen neuen, Transport-Frame, der größer ist als der normale Standard-Ethernet-Frame und einen Jumbo-Frame mit einem Ethernet-Nutzlastfeld und Verbindungsinformationsfeldern umfasst, durch:
- Kopieren, mit Ausnahme der Präambel der Datenfelder und der Ethernet-Nutzlast des Nutzer-Frames in das Jumbo-Frame-Ethernet-Nutzlastdatenfeld;
- Bereitstellen einer Verbindungsidentifikation mit einer Kombination einer Ziel- und Ausgangsadresseninformation des Netzeingangspunkts und eines externen oder peripheren Punkts des Zugangsnetzes zum Arbeiten als ein Zugangsnetz-Ausgangspunkt des Pakets, wobei die Ausgangsadresseninformation eine designierte MAC-Adresse umfasst und die Zieladresseninformation eine designierte MAC-Adresse umfasst, und wobei der Dienst, der zu dem Paket gehört, mittels eines VLAN-Tags identifiziert wird, dessen Verbindungsidentifikation für die Verbindung eindeutig ist; und
- Transportieren des Transport-Frames als ein Jumbo-Frame über das Zugangsnetz an den relevanten Ausgangspunkt unter Verwendung der Zieladresseninformation der eindeutigen Verbindungsidentifikation und unter Verwendung des neuen Transport-Frames nur in dem Zugangsnetz.

8. Verfahren nach Anspruch 7, **dadurch gekennzeichnet, dass** dieses die Schritte umfasst zum, an einem Knoten, der als ein Zugangsnetz-Ausgangspunkt arbeitet, bei Empfang eines Pakets, das über das Zugangsnetz transportiert wird, als ein neuer Jumbo-Transport-Frame, Entkapseln des Jumbo-Frames durch:
- Entfernen von Verbindungsidentifikationsfeldern;
- Erzeugen einer Präambel und FCS-Feldern zur Bereitstellung eines externen Frames; und
- Weitersenden des entkapselten externen Frames.

## Revendications

1. Noeud conçu pour jouer le rôle de point d'entrée d'un réseau d'accès (20) supportant la communication de données en paquets sous la forme de trames selon la technologie Ethernet entre des utilisateurs ou entre des utilisateurs et des fournisseurs de service,
**caractérisé**
**en ce qu'**il comprend des moyens de conversion (3) qui, au moins pour toutes les connexions à destinataire unique et au moins pour l'établissement d'une connexion à commutation de paquets entre un utilisateur et un fournisseur de service, sont conçus pour convertir et encapsuler chaque trame d'utilisateur entrante qui arrive, ayant une taille normale de trame Ethernet standard contenant un préambule, des champs de données pour l'adresse de destination, l'adresse de source, le type, le réseau local virtuel et une charge utile Ethernet, en une nouvelle trame de transport plus grande que la trame ayant la taille d'une trame Ethernet standard et uniquement destinée à être utilisée sur le réseau d'accès, la nouvelle trame de transport comprenant une trame étendue avec un champ de charge utile Ethernet et des champs d'informations de connexion en copiant, hormis le préambule, les champs de données et la charge utile Ethernet de la trame utilisateur dans le champ de données de charge utile Ethernet de la trame étendue et en fournissant une identification de connexion qui comprend une combinaison des informations d'adresse de source du point d'entrée sur le réseau du paquet entrant qui arrive et des informations d'adresse de destination d'un point extérieur ou périphérique du réseau d'accès qui joue le rôle de point de sortie du réseau d'accès, où le paquet doit quitter le réseau d'accès, et une balise de réseau local virtuel pour indiquer le service auquel appartient le paquet, les informations d'adresse de source comprenant une adresse MAC désignée et les informations d'adresse de destination comprenant une adresse MAC désignée, ladite identification de la connexion étant unique pour la connexion.

2. Noeud selon la revendication 1, **caractérisé en ce qu'**il est en outre conçu pour jouer le rôle de point de sortie du réseau d'accès et **en ce que** les moyens de conversion (3, 4) sont conçus pour désencapsuler une trame étendue encapsulée lorsqu'il joue le rôle de point de sortie.

3. Noeud selon la revendication 1 ou 2, **caractérisé en ce qu'**il constitue un point de branchement par lequel la totalité du trafic de données en paquets doit passer.

4. Noeud selon l'une quelconque des revendications 1 à 3, **caractérisé en ce que** l'identification comprend une balise de réseau local virtuel, ladite balise indiquant à quel service appartient un paquet.

5. Noeud selon l'une quelconque des revendications 1 à 4, **caractérisé en ce que**, pour toutes les connexions à destinataire unique, une adresse MAC est attribuée comme adresse d'origine et de destination du paquet, respectivement.

6. Noeud selon la revendication 5, **caractérisé en ce que** les adresses MAC sont attribuées par un système de gestion qui gère la connexion.

7. Procédé de fourniture de communications entre des utilisateurs ou entre des utilisateurs et des fournisseurs de service sur un réseau d'accès supportant la communication de données en paquets sous la forme de trames qui mettent en oeuvre la technologie Ethernet,
**caractérisé en ce qu'**il comprend les étapes, exécutées sur un point ou un noeud jouant le rôle de point d'entrée du réseau d'accès à la réception de tout paquet d'utilisateur transporté dans une trame offrant un format standard Ethernet normal en provenance d'un réseau extérieur, consistant à :
- convertir et encapsuler le paquet d'utilisateur contenant un préambule, des champs de données pour l'adresse de destination, l'adresse de source, le type, le réseau local virtuel et une charge utile Ethernet, en une nouvelle trame de transport qui est plus grande que la trame ayant la taille d'une trame Ethernet standard, consistant en une trame étendue avec un champ de charge utile Ethernet et des champs d'informations de connexion, en effectuant les étapes consistant à :
- copier, hormis le préambule, les champs de données et la charge utile Ethernet de la trame utilisateur dans le champ de données de charge utile Ethernet de la trame étendue ;
- fournir une identification de connexion qui comprend une combinaison des informations d'adresse de source du point d'entrée sur le réseau du paquet entrant qui arrive et des informations d'adresse de destination d'un point extérieur ou périphérique du réseau d'accès qui joue le rôle de point de sortie du réseau d'accès pour le paquet, les informations d'adresse de source comprenant une adresse MAC attribuée et les informations d'adresse de destination comprenant une adresse MAC attribuée, ladite identification de la connexion étant unique pour la connexion ; et
- transporter la trame de transport sous la forme d'une trame étendue sur le réseau d'accès vers le point de sortie applicable en utilisant les informations d'adresse de destination de l'identification unique de connexion et en utilisant la nouvelle trame de transport uniquement sur le réseau d'accès.

8. Procédé selon la revendication 7, **caractérisé en ce qu'**il comprend l'étape, exécutée sur un noeud jouant le rôle de point de sortie du réseau d'accès, après réception d'un paquet transporté sur le réseau d'accès sous la forme d'une nouvelle trame étendue de transport, consistant à désencapsuler la trame étendue en effectuant les étapes consistant à :
- retirer les champs d'identification de la connexion ;
- produire un préambule et des champs FCS pour produire une trame extérieure ; et
- envoyer la trame extérieure désencapsulée.
